# EUROPEAN PATENT SPECIFICATION

(11) **EP 2 325 508 B1**
(45) Date of publication and mention of the grant of the patent: **05.06.2013**
(21) Application number: 10191390.3
(22) Date of filing: 16.11.2010
(51) Int. Cl.: F16C 32/04, F16C 39/06, F16H 1/20, F16H 1/02, F16H 57/04

(54) **Rpm multiplier and torque increaser**
Geschwindigkeits- und Drehmoment-Übersetzer
Multiplicateur de vitesse et de couple

(30) Priority: 16.11.2009 UY 3224809
(43) Date of publication of application: 25.05.2011
(73) Proprietor: Corradini, Martin Eugenio, Buenos Aires (AR)
(72) Inventor: Corradini, Martin Eugenio, Buenos Aires (AR)
(74) Representative: Gulde Hengelhaupt Ziebig & Schneider

(56) References cited:
- EP-A1- 0 189 518
- EP-A1- 1 069 671
- WO-A1-94/19625
- DE-A1- 10 254 127
- DE-B1- 2 210 995
- GB-A- 2 102 532
- JP-A- 2006 038 110
- SU-A1- 800 463
- US-A- 3 814 962

## Description

The rpm multiplier with torque increaser for turbines is especially designed to be applied to the energy generation system for vessels and submarines through hydroelectric turbines and to the energy generation system for automobiles, motor vehicles, auto transports, machinery and motorcycles of own invention.

SU 800 463 A1 and JP 2006 038 110 A show respectively a rpm multiplier and a torque increaser according to the preamble of claims 1 and 4.

It can be used with any kind of turbine: wind, hydroelectric, etc. It can also be placed between the transmission and the engine in order to increase rpm, torque and power. It can be placed between the transmission and the semi axis for the same purpose. It is possible to use the torque increaser between the motor and the transmission, among axes or semi axes, helices. The torque increaser is the cheapest and simplest model of the product range.

The system shows an option to increase rpm, reducing friction, as well as to implement devices (a model is shown in this patent) in order to add a force (electromagnetic, magnetic or combinations, etc) to the force of the main rotor of the turbine that operates the electrical generator, making it possible to obtain energy with less mechanical work of the main rotor of the turbine.

Friction gear and the loss of mechanical energy of the torque increaser are reduced and a force (electromagnetic or magnetic or combinations, etc.) is added to the force (mechanical) of the main rotor of the turbine that operates the electrical generator, making it possible to obtain electrical energy with less mechanical energy from the main rotor of the turbine (adding an electromagnetic or magnetic work to the mechanical work of the main rotor of the turbine).

The set of rpm multiplier and torque increaser is placed (as a example) between the main rotor of the turbine and the generator. Its purpose is to increase rpm reducing friction to a minimum possible and to add a force (electromagnetic, magnetic or combinations, etc) to a force (mechanical) of the main rotor of the turbine that operates the electrical generator obtaining electrical energy with less mechanical energy from the main rotor of the turbine, (adding an electromagnetic or magnetic work to the mechanical work of the main rotor of the turbine).

The rpm multiplier with torque increaser for turbines consists of a set of gears of different radii placed in order to increase rpm, and gear type rotors used to add a force (electromagnetic, magnetic or combinations, etc.) to the force of the main rotor of the turbine that operates the electrical generator, making it possible to obtain electrical energy with less mechanical energy from the main rotor of the turbine (adding an electromagnetic or magnetic work to the mechanical work of the main rotor of the turbine); and obtaining more electrical energy than the mechanical energy transmitted by the main rotor of the turbine to the generator through a force (electromagnetic, magnetic or combinations, etc.) placed between them.

The rpm multiplier is composed of gears, each of them of two toothed radii, one bigger than the other.

They are engaged as follows: The smallest toothed radius (minor radius section) of the second gear will be engaged with the biggest toothed radius (major radius section) of the first gear.

Thus, the biggest toothed radius of the second gear will rotate as many times in relation to the biggest toothed radius of the first gear as to the smallest toothed radius of the second.

Magnets, electromagnets or combinations, etc. are placed in the gear teeth in order to reduce friction. As they have the same polarity they will repel each other, reducing friction through that magnetic (or electromagnetic) force.

The described torque increaser (one model of the product range) is composed of at least a pair of gear type rotors, whether solid or non-solid, with at least two teeth rows each, working against the rotor of the generator.

The rotor of the generator, in its outer part, has the same toothed shaped than the pair of gears of the gear type rotors of the torque increaser, but opposite them.

The pair of gear type rotors will be engaged with the last gear of the multiplier and against the rotor of generator which will have in the outer part of its rotor the same amount of teeth rows than the gears of the multiplier.

The gear teeth have magnets, electromagnets, combinations, etc in one of their sides, in one direction in the first row and in the opposite direction in the second row, and against them, the ones of the rotor of the generator. One row works in one direction of rotation, and the other one in the opposite direction.

Electromagnets, magnets or combinations, etc. are repelled adding the electromagnetic (or magnetic) force to the main rotor of the turbine and operating in combination against the rotor of the generator. Thus, the rotor of the generator is operated by the force of the main rotor of the turbine (mechanical energy) and the electromagnetism or magnetism (electromagnetic or magnetic energy) of the torque increaser.

The system is claimed as exclusive right and property described above and accordingly:
The rpm multiplier with torque increaser for turbines consists of a group of different radii gears with the purpose of increasing rpm and gear type rotors to add force (either electromagnetic or magnetic or a combination of both, etc.) to the (mechanical) force of the main rotor of the turbine that activates the electric generator, producing electric energy with less mechanic energy of the main rotor of the turbine (adding either an electromagnetic or magnetic work or a combination of both, etc., being able to obtain more electric energy than the mechanic that the main rotor of the turbine transmits to the generator by means of an electromagnetic or magnetic force placed between both the rotor and the generator).

The rpm multiplier is composed of gears with two toothed radii, one bigger than the other, being it possible to get more rigidness by means of different intermediate radii, they work as follows: The smallest toothed radius of the second gear, engages with the biggest toothed radius of the first gear, as the smallest toothed radius of the second gear. With the purpose of reducing friction, magnets (or electromagnets) are placed in the gear teeth, they have the same polarity and repel each other reducing friction by means of that magnetic (or electromagnetic) force.

The torque increaser is composed of at least a pair of gear type rotors, whether solid or not, with at least two rows of teeth each. They engage with the last gear of the rpm multiplier and against the rotor of the generator, which presents the same amount of teeth rows in the outer part of its rotor like the multiplier gears, but oppose to them.

Gear teeth incorporate electromagnets (or magnets) to one of their sides, in one direction in the first row and in the opposite direction in the second row and opposed to them those concerning the rotor of the generator.

Electromagnets (or magnets) repel themselves, and they make electromagnetism force adds to that of the main rotor of the turbine and they work in combination against the rotor of the generator; in this way the rotor of the generator - the central component of the torque increaser - is going to be moved by the sum of the forces of the main turbine rotor (mechanic energy) and that of the electromagnetism or magnetism (electromagnetic or magnetic energy) of the torque increaser.

There are multiple possibilities to place rotors of the torque increaser, depending on specific needs.

The rpm multiplier is composed of a succession of gears, each gear of two different toothed radii, one bigger than the other (intermediate radii can be used in order to obtain more rigidness and resistance to torsion and work).

Gears of the rpm multiplier are engaged in such a way that the biggest radius of the first gear engages with the smallest radius of the second, thus, the biggest radius of the second gear rotates as many times in relation to the biggest radius of the first gear as to the smallest radius of the last one, and successively on consecutive gears.

The number of gears and radii will depend on the rpm necessary to make the generator work, based on the number of rpm of the main rotor and taking into account the vessel or vehicle design where it will be applied, as well as the speed, energetic requirements, etc.

The same design can be applied to any type of turbine, i.e., wind turbines, hydroelectric turbines, etc..

The gears are placed in a crank shaft or spiral style, depending on the needs. The crankshaft-like disposition is convenient in case rpm reduction system is needed, which can be connected to the gears of the multiplier in a parallel way. In vessels, machineries and vehicles of limited speed, it is not necessary to reduce rpm, except for special circumstances. In high performance vehicles, it is necessary to reduce rpm as the vehicle increases speed; special reducers will be used for every case in particular. (Reducers designs belong to independent patented inventions).

In order to reduce friction produced by the gears, permanent magnets or electromagnets or combinations, etc. are (optionally) placed in the gear teeth. As they have the same polarity, they repel each other. In order to avoid direct contact with the magnets, same magnets are placed inside a depression in the central area of the gear teeth, the sides of the depression are connected to each preventing magnets from having contact among them and therefore get damaged.

Magnets can be glued, bolted, both, or any other convenient way of fastening, taking into account every case in particular. It is convenient to isolate the contact area between the magnet and the gear (avoiding the gear being magnetized), in relation to the material used for the manufacturing of that particular gear.

Friction is counteracted by the repulsion force of magnets, electromagnets, combinations, etc..

Magnets refrigeration has to be carefully taken into account. They must be continuously and interruptively refrigerated during working. In order to facilitate refrigeration, small magnets or electromagnets separated by grooves will be (optionally) placed. The grooves will be placed successively and between contact areas of the gear.

In case of using electromagnets, electric current will be transmitted through gear grooves which will be isolated, as well as the contact areas between electromagnets and gears. (It represents only one of multiple options).

Every gear is held by beams, bars or rigid panels like bedplates which maintain the gears centered in both sides, by the smallest radius, in a non-toothed section or by a middle one in the case of using them so as to obtain more rigidness.

In order to reduce the friction produced between the gears and the beams, bars or rigid panels like bedplates, permanent magnets or electromagnets or combinations, etc. can (optionally) be used as a rail.

Magnets are repelled, reducing the friction and maintaining the gears centered inside the beams. This design will be formed of magnets placed opposite the sides and in the centre of the rail, the ones in the center will be repelled, the ones on the sides can be repelled or attracted to each other, the friction area will be only the lateral part of the rail with the magnets and that will make contact with the gear. It is necessary to continuously refrigerate the rail magnets. They will be preferably placed in a succession of small magnets, with space among them, and in that space, grooves in the lateral and central part of the rail will be placed in order to refrigerate them.

Electromagnets can be placed for the same purpose.

Any kind of rail, bearing, etc, can also be used. Magnets are used in order to reduce friction to the minimum possible and to avoid the loss of mechanical energy.

The torque increaser is preferably placed between the multiplier and the rotor of the generator. (It can also be put in different places, even before the multiplier). Its purpose is to add a force (electromagnetic or magnetic) to the force of the main rotor of the turbine that operates de electrical generator, making it possible to obtain more electric energy with less mechanical energy of the main rotor of the turbine (adding an electromagnetic or magnetic work to the mechanical work of the main rotor of the turbine), counteracting the energy generator and reducing to the minimum possible the mechanical work of the main rotor of the turbine that is necessary to operate the generator, obtaining energy giving up less mechanical energy, adding a force (magnetic or electromagnetic or combinations, etc.) between the main rotor of the turbine (mechanical energy) and the rotor of the generator.

The torque increaser is composed of at least a pair of gear type rotors, solid or non-solid, with at least two teeth rows each, placed against the rotor of generator.

The rotor of the generator has in its outer part the same design in the opposite direction of the pair of gear type rotors.

They are engaged with the last gear of the multiplier and against the rotor of the generator.

The gear teeth are completely solid in one of their sides and hollow in the other ones.

Electromagnets or magnets or combinations, etc, are placed in this hole, the first gear row act the central rotor of the torque increaser in one direction (opposite direction) and the second row acts the central rotor of the torque increaser in the other direction (opposite direction).

The amount of gear type rotors placed will depend on the need. Electromagnets are placed in that hole facilitating the supply of electric current.

The rotor of the generator is embossed on its outer part, but in the opposite direction, and they are engaged with the gears of the torque increaser.

The gear type rotors of the torque increaser are engaged with the gears of the central rotor of the generator. As they have the same polarity they repel each other. Thus, the electromagnetic force, as it adds a force between the main rotor and the generator, works helping the rotor of the generator rotate, increasing the main rotor torque and reducing the mechanical work necessary to operate the generator.

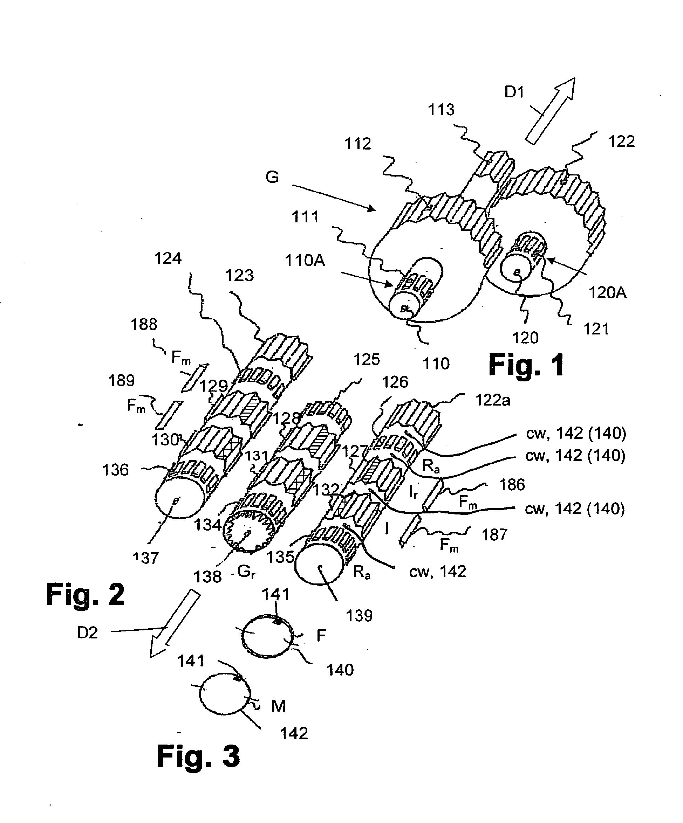

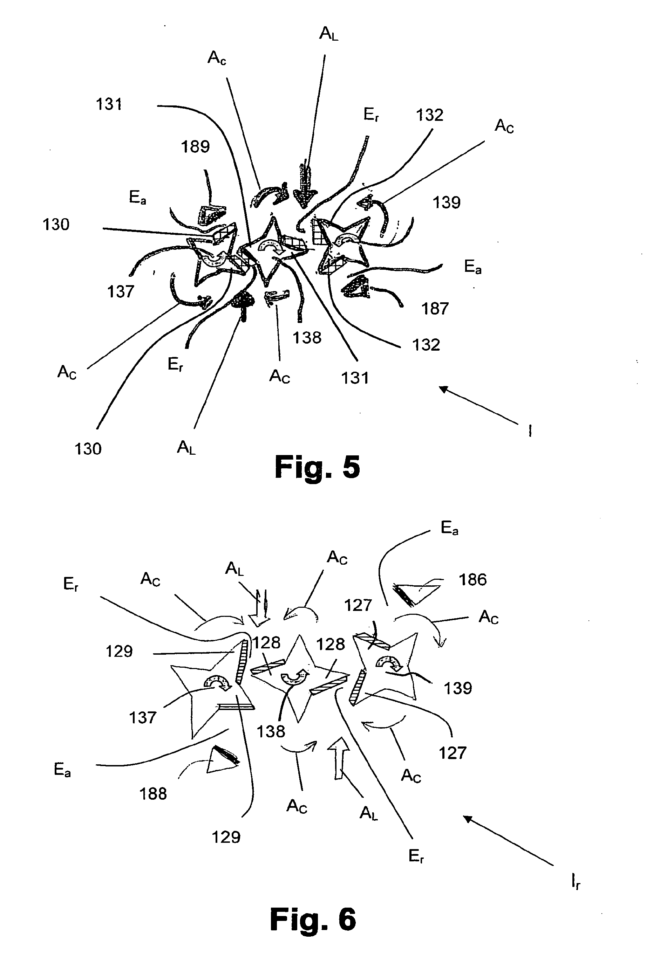

For example in a normal direction I of the rotor 138 of the generator, one of the gear type rotors of the torque increaser, (the second rotor 139 on the right Fig. 2 and Fig. 5) will push the rotor 138 of the generator down, and the opposite gear of the torque increaser (the first rotor 137 one on the left Fig. 2 and Fig. 5) will push the rotor 138 of the generator up (torque principle).

For example in a opposite direction Iᵣ of the rotor 138 of the generator, one of the gear type rotors of the torque increaser, (the second rotor 139 on the right Fig. 2 and Fig. 6) will push the rotor 138 of the generator up, and the opposite gear of the torque increaser (the first rotor 137 one on the left Fig. 2 and Fig. 6) will push the rotor 138 of the generator down (torque principle).

In order to increase the electromagnetic force, fixed electromagnets or magnets can be optionally placed in the skeleton or sarcophagus. Such electromagnets or magnets can be attracted or repelled in the same direction of rotation than the gears of the torque increaser.

In vessels, the energy necessary for the working of the torque increaser can be obtained from solar panels, small wind generators (preferably of vertical rotor) or from small hydroelectric turbines without the torque increaser. They will keep batteries charged.

In vehicles, the energy can be obtained from solar panels, a small generator without the torque increaser, aerodynamic generators or KERS (Kinetic Energy Recovery System) or combinations, which will maintain the batteries charged. (They belong to independent patented inventions).

When a greater force is not necessary, the torque increaser can be composed of permanent magnets. In such case, the torque increaser will work in only one direction of rotation.

The torque increaser is convenient in order to obtain great powers, since it needs energy to work and its purpose has already been explained.

The torque increaser can be composed of one, two, three or four pairs of gears placed opposite the rotor of the generator, and their corresponding fixed electromagnets or magnets. Thus, a greater force (electromagnetic or magnetic) is obtained in order to operate the generator.

A double row of gear type rotors against the rotor of the generator can also be used. The same principle and design are applied, a gear type rotor of the torque increaser moves the other gear of the torque increaser and they, as a whole, operate the rotor of the generator. In such case, the intermediate rotors will have electromagnets or magnets on both sides of the teeth.

The rotor of the generator can be operated by two or more sets of multiplier and increaser, in which case, each torque increaser will operate one rotor and the rotors will operate the generator.

Electromagnets against electromagnets, electromagnets against magnets, etc, can be used depending on the need.

The electric conduction washer is shown as an example. The male washer rotates inside the female washer, with a contact area; the female isolated from the outside transmits energy to the mobile part. It is worthless to show the different ways of transmitting energy in this patent application. Different samples will be introduced for such purpose, as well as the transmission of energy in the rotors of the torque increaser. There are multiple and random ways of transmitting energy.

Due to the use range, the electronic devices correspond to independent patented inventions.

A brief description of the drawing is shown below. Fig. 1 and Fig. 2 are perspective and exploded drawings in order to show all its devices. Fig. 3 to Fig 6 show schematic drawings.
- Figure 1:: The rpm multiplier.
- Figure 2:: The torque increaser.
- Figure 3:: A sample of electrical conduction washer.

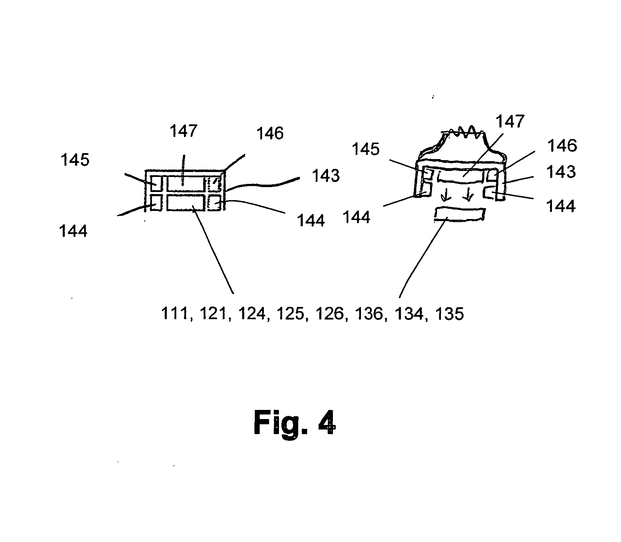

- Figure 4:: A cut of the magnetic support rail.
- Figure 5:: A cut of the torque increaser to show the work of magnets, electromagnets or combinations in one direction ("normal" direction) of rotation.
- Figure 6:: A cut of the torque increaser to show the work of magnets, electromagnets or combinations the other direction ("opposite" direction to the "normal" direction) of rotation.

Referring to Fig. 1 the rpm multiplier, two gears, gear assembly and succession, are shown.

A second component (second gear) of rpm multiplier 110 is shown. Also shown is a magnetized rail 111 in a extension 110A of the second component 110 as a component of the support.

The mayor radius section 112 of the second gear of the rpm multiplier, interlock with the torque increaser gear type rotors 122a, 123.

The minor section 113 of the second component 110 (second gear) of the multiplier interlocks with the mayor radius section 122 of the first component (first gear) 120 of the multiplier.

Numeral 120 shows the first component of the rpm multiplier.

Also shown is a magnetized rail 121 in a extension 120A of the second component 120 as a component of the support.

Magnets, electromagnets or combinations, etc. are placed in the gear teeth 112, 113, 122 of the rpm multiplier (Fig. 1) in order to reduce friction. As they have the same polarity they will repel each other, reducing friction through that magnetic (or electromagnetic) force in the devices 112, 113, 122.

The gears G of this rpm multiplier 110, 120 for example are connected with a turbine in the shown direction D1.

Referring to Fig. 2 the torque increaser has a first (west) component 137.

Numeral 138 shows a external section 138 (outer part) of the rotor of a generator Gᵣ. The external section 138 is a central component of the torque increaser. This external section 138 has a cut but extends in the direction D2 to the generator.

The torque increaser has a second (east) component 139.

The numerals 136, 134, 135 and 124, 125, 126 shown exemplary two magnetized rails of the components 137 (first), 138 (central), 139 (second) of the torque increaser.

Generally the torque increaser is composed of the at least two rotors 137, 139. They rotate in the same direction. The first and a second gear type rotor 137, 139 have gear teeth 129, 130/127, 132, and the central rotor 138 rotates in a reverse direction to the direction of the first and a second gear type rotor 137, 139. The central rotor 138 presents the same disposition of gear teeth 128, 131 like the first and a second gear type rotor 137, 139, arranged to the gear teeth 129, 130/127, 132 of the first and a second gear type rotor 137, 139. The gear teeth 129, 130/127, 132 of the first and a second gear type rotor 137, 139 face to the gear teeth 128, 131 of the central rotor 138.

It is proposed according to the invention that the faced teeth 130, 131/131, 132/129, 128/128, 127 of the first and the second gear type rotors 137, 139 and the central rotor 138 comprise incorporate permanent magnets or electromagnets or combinations, so that the incorporate permanent magnets or electromagnets or combinations of the first and the second gear type rotors 137, 139 and the central rotor 138 interact with each other by magnetic or electromagnetic force.

Basically the torque increaser can be composed in a row or more then one row of permanent magnets. In such case, the torque increaser will work in only one direction of rotation. To use the "normal" direction I of the central rotor 138 of the torque increaser - the permanent magnets are arranged in the gear teeth 130, 131, 132 of this first component 137, the central rotor 138 and the second component 139 in the normal sense (shown in Fig. 5) or - to use the opposite direction Iᵣ of the central rotor 138 of the torque increaser - the permanent magnets are arranged in the gear teeth 129, 128, 127 of this first component 137, the central rotor 138 and the second component 139 in the oppsite sense (shown in Fig. 6)

Firstly there is shown in Fig. 2 and Fig. 5 the torque increaser I in the normal direction of rotation of the central component 138 (central rotor or external section of the rotor generator) of the torque increaser 138.

The first component 137 (first gear type rotor) of the torque increaser is shown. There are shown the gear teeth 130 of this first component 137 in the normal sense. The teeth 130 are completely solid in one of their sides and hollow in the other ones. Electromagnets or magnets or combinations - see crossed hatch -, are placed in this hole and interlock with the teeth 131 of external section 138 of the rotor of the generator. In the interaction with teeth 131 acts the electromagnetic strength Fₘ.

This coaxial arranged external section 138 of the rotor of the generator of the torque increaser I is shown. The gear teeth 131 - arranged in the normal sense - of the torque increaser are completely solid in one of their sides and hollow in the other ones. Electromagnets or magnets or combinations - see crossed hatch -, are placed in this hole and interlock with the teeth 130 and the teeth 132 of the gear type rotors 137 (first component), 139 (second component). In the interaction with the teeth 130 and the teeth 132 acts the electromagnetic strength Fₘ.

See the next coaxial arranged second component 139 (second gear type rotor) of the torque increaser I. The gear teeth 132 of this second component 139 of the torque increaser - arranged in the normal sense - are completely solid in one of their sides and hollow in the other ones. Electromagnets or magnets or combinations - see crossed hatch -, are placed in this hole and interlock with the teeth 131 of the external section 138 of the rotor of the generator. In the interaction with the teeth 131 is the electromagnetic strength Fₘ.

Secondly there is shown in Fig. 2 and in Fig. 5 the increaser Iᵣ in the opposite direction of rotation of the central component 138 (central rotor or external section of the rotor generator) of the torque increaser 138.

There are shown the teeth 129 of the torque increaser Iᵣ of this first component 137 - arranged in the opposite sense - to the sense of the teeth 130. The gear teeth 129 of the torque increaser Iᵣ are completely solid in one of their sides and hollow in the other ones. Electromagnets or magnets or combinations - see striped hatch -, are placed in this hole and interlock with the teeth 128 of the external section 138 of the rotor of the generator. In the interaction with the teeth 128 acts the electromagnetic strength Fₘ.

The teeth 128 of the external section 138 of the rotor of the generator in the torque increaser Iᵣ, with opposite sense - to the sense of the teeth 131 - is also shown. The gear teeth 128 of the torque increaser are completely solid in one of their sides and hollow in the other ones. Electromagnets or magnets or combinations - see striped hatch -, are placed in this and interlock with the teeth 129 of the first component 137 and the teeth 127 of the second component 139. In the interaction with the teeth 129 and the teeth 127 acts the electromagnetic strength Fₘ.

The teeth 127 of the torque increaser Iᵣ are shown. They have the opposite sense - to the sense of the teeth 132 - like the teeth 129, 128. The gear teeth 127 of the second component 137 of this torque increaser are completely solid in one of their sides and hollow in the other ones. Electromagnets or magnets or combinations - see striped hatch -, are placed in this hole and interlock with the teeth 128 of the external section 138 of the rotor of the generator. In the interaction with 128 acts the electromagnetic strength Fₘ.

Moreover referring to Fig. 2 permanent magnets or electromagnets 186, 187, 188, 189 are shown (magnetic and/or electromagnetic strength Fₘ in attraction and/or repulsion) fixed to the sarcophagus (not shown). It helps to transfer the electromagnetic strength Fₘ in the correct direction.

Connection between rpm multiplier and torque increaser:
The teeth 122a of the second component 139 of the torque increaser, interlock with the teeth 112 of the major radius section of the second gear of the rpm multiplier or with an automatic gear box, if necessary.
The teeth 123 of the first component 137 of the torque increaser, interlock with the teeth 112 of the major radius section of the second gear of the rpm multiplier or with an automatic gear box, if necessary.

Referring to Fig. 3 in connection with Fig. 2 the conductive washer and possible positions are shown.

With the numerals - cw - the places are shown to put the conductive washer, in the necessary numbers according the electrical circuit. If the torque increaser use electromagnets it is necessary to arrange energy in electrical circuits in the three rotors 127, 138, 139.

The conductive washer cw could be placed in the free spaces of each rotor 137, 138, 139 of the torque increaser, in a random disposition as convenient.

The conductive washer cw is placed in all the rotors of the torque increaser, if electromagnets are used, in each one 137, 138 and 139 but only the positions of a male parts 142, M are shown with the numeral cw, 142 in the second component 139 of the torque increaser.

In principle a female part 140, F cover the contact zone 141 of the male part 142, M. The male parts 142, M is fixed to each rotor 138, 139, 139 and rotates inside the femal part 140, F in the free spaces of each rotor 137, 138, 139 making contact 141 in the central zone of each rotor 137, 138, 139.

The female part 140, M is fixed outside to the rotors 137, 138, 139 .

Exemplarily shown are only the positions of the male parts 142, M exemplarily at the second component 139 (rotor) of the torque increaser, where the numeral cw, 142 is marked (Fig. 2).

The conductive washer female parts 140, F and male parts 142, M are consisting in to parts armed together by solder.

Referring to Fig. 4 a cut of the magnetic support rail ist shown.

Friction, to support part of the weight and act like a rail.

The part 143 make the friction in the lower end points, with the rotors 137, 138, 139 of the torque increaser, on each side of the support. The part 143 is the only part of the support that have direct contact with the rotors 137, 138, 139 of the torque increaser. The friction part 143 keep the support armed when the electromagnets are not working.

The rotors 137, 138, 139 of the torque increaser have a depression. In the interaction of the depression and the part 143 (lower end points) is the friction area.

The part with the numeral 143 interlock with that depression in the rotors 137, 138, 139 of the torque increaser. The depression in the rotors 137, 138, 139 of torque increaser is not shown. This depression are near the magnetized rails 111, 121, 124, 125, 126, 136, 134, 135 on each side. That is the conncetion of the support part with the torque increaser.

The devices 144, 145, 146 keep centered the supports 111, 121, 124, 125, 126, 136, 134, 135 by means of a magnetic or electromagnetic strength, to dissipate heat in the free spaces.

Device 144 works in attraction with the sides of the magnetized rails (components of support) 111, 121, 124, 125, 126, 136, 134, 135. They keep centered the support rails.

Device 147 works in repulsion with the upper side of of the magnetized rails (components of support) 111, 121, 124, 125, 126, 136, 134, 135 support part of the weight. The device 147 supports part of the weight by means of a magnetic or electromagnetic strength.

The other part of the weight (and work) is support by 143, the only part of the support that have direct contact with the rotors 137, 138, 139 of the torque increaser (must to be lubricated).

So, the components of the support 111, 121, 124, 125, 126, 136, 134, 135 are places to put the magnetic support, they interact with 147, 144, 143, 146, 145.

Fig. 4 shows in principle all the magnets inside the support with numerals 144, 145, 146, 147, 111, 121, 124, 125, 136, 134, 135.

The torque increaser can be composed in a row or more then one row of permanent magnets. In such a case, the torque increaser will work in only one direction of rotation

Basically the torque increaser can be composed in two rows or more then two rows of electromagnets. In such a case, the torque increaser will work in two directions of rotation.

FIG. 5 shows a cut of the torque increaser to show the work of electromagnets in one direction, the "normal" direction I of rotation of the central rotor 138.

When the complete device is working in normal direction I, the multiplier, the torque increaser, etc. and only the electromagnets of the second row 130, 131, 132 of the rotors 137, 138, 139 are working. The electromagnets of the first row 129, 128, 127 of the rotors 137, 138, 139 are not working.

Fig. 5 shows the torque increaser composed of the at least two rotors (components) 137, 139. They rotate in the same direction (counter-clockwise). The first and the second gear type rotor 137, 139, with gear teeth 130, 132 each, and a central rotor 138 rotate in the opposite direction (clockwise), which 138 presents the same disposition of gear teeth 131, arranged to each other, so that the gear teeth 130, 132 of the first and the second gear type rotor 137, 139 face to the gear teeth 131 of the central rotor 138.

It is intended that the faced teeth 130, 131 and 131,132 of the first and the second gear type rotors 137, 139 and the central rotor 138 comprise incorporate permanent magnets or electromagnets or combinations, so that the incorporate permanent magnets or electromagnets or combinations of the first and the second gear type rotor 137, 139 and the central rotor 138 interact with each other by permanent magnetic and/or electromagnetic force.

The direction of the action by repulsion of the electromagnets 130, 131 and 131, 132 and the action of the electromagnetic strength Fₘ in the normal direction of rotation I of the rotor 138 are shown by the linear arrows A_{L}.

It is shown in Fig. 5 referring to Fig. 2 - as a example - a cut along the teeth 130, 131, 132 and the incorporated eletromagnets - see crossed hatches -, of the first (west) component 137 of the torque increaser I (teeth in the second row 130, 131, 132 arranged in the normal sense), the external section 138 of the rotor of the generator or central component of torque increaser and the second (east) component 139 of torque increaser between the other permanent magnets and/or electromagnets 189, 187 fixed to the sarcophagus.

It is shown how the gear type rotors 137, 139 and the external section 138 of the rotor of the generator 138 in normal direction of torque increaser, work together to sum an electromagnetic strength Fₘ.

It is shown the electromagnetic strength Eᵣ in repulsion and the electromagnetic strength Eₐ in attraction.

The curved arrows A_{c} show the sense of rotation of the gear type rotors 137, 139 and external section 138 of the rotor 138 of the generator of the torque increaser.

In the normal direction I of the rotor 138 of the generator, one of the gear type rotors of the torque increaser, the second rotor 139 - on the right - push the rotor 138 of the generator down, and the opposite gear of the torque increaser the first rotor 137 - on the left - push the rotor 138 of the generator up.

The permanent magnets or electromagnets or combinations 187, 189 are fixed to the sarcophagus (permanent magnetic or electromagnetic strength in attraction and/or repulsion) help to transfer the electromagnetic strength Fₘ in the correct direction.

Beyond that, between the electromagnets fixed to the teeth 130, 132 interact with permanent magnets and electromagnets or combinations fixed to the sarcophagus 189, 187 and they interact in a diagonal magnetic or electromagnetic strength to the magnets or electromagnets or combinations 188, 186 (Fig. 2) fixed to the sarcophagus 188, 186.

FIG. 6 shows a cut of the torque increaser to show the work of electromagnets in the other one direction, the "opposite" direction Iᵣ of rotation of the central rotor 138.

When the complete device is working in opposite direction Iᵣ, the multiplier, the torque increaser, etc. and only the electromagnets of the first row 129, 128, 127 of the rotors 137, 138, 139 are working. The electromagnets of the second 130, 131, 132 of the rotors 137, 138, 139 are not working.

Fig. 6 shows the torque increaser composed of the at least two rotors 137, 139. They rotate in the same direction (clockwise). The first and the second gear type rotor 137, 139, with gear teeth 129, 127 each, and a central rotor 138 rotate in the opposite direction (counter-clockwise), which presents the same disposition of gear teeth 128, arranged to each other, so that the gear teeth 129, 127 of the first and the second gear type rotor 137, 139 face to the gear teeth 128 of the central rotor 138.

It is intended that the faced teeth 129, 128 and 128, 127 of the first and the second gear type rotors 137, 139 and the central rotor 138 comprise incorporate permanent magnets or electromagnets or combinations, so that the incorporate permanent magnets or electromagnets or combinations of the first and the second gear type rotor 137, 139 and the central rotor 138 interact with each other by magnetic or electromagnetic force.

The direction of the action by repulsion of the electromagnets 130, 131 and 131, 132 and the action of the electromagnetic strength Fₘ in the normal direction of rotation of the rotor 138 are shown by the linear arrows A_{L}.

It is shown in Fig. 6 referring to Fig. 2 - as a example - a cut along the teeth 129, 128, 127 and the incorporated eletromagnets - see striped hatches -, of the first (west) component 137 of the torque increaser Iᵣ (teeth in the first row 129, 128, 127 arranged in the opposite sense to the teeth 130, 131, 132 in the second row), the external section 138 of the rotor of the generator or central component of torque increaser and the second (east) component 139 of torque increaser between the other permanent magnets and/or electromagnets 188, 186 fixed to the sarcophagus.

It is shown how the gear type rotors 137, 139 and the external section 138 of the rotor of the generator 138 in opposite direction of torque increaser, work together to sum an electromagnetic strength Fₘ.

It is shown the electromagnetic strength Eᵣ in repulsion and the electromagnetic strength Eₐ in attraction.

The curved arrows A_{c} show the sense of rotation of the gear type rotors 137, 139 and external section 138 of the rotor 138 of the generator of the torque increaser.

In the opposite direction Iᵣ of the rotor 138 of the generator, one of the gear type rotors of the torque increaser, the second rotor 139 - on the right - push the rotor 138 of the generator up, and the opposite gear of the torque increaser the first rotor 137 - on the left - push the rotor 138 of the generator down.

The permanent magnets or electromagnets or combinations 188, 186 are fixed to the sarcophagus (permanent magnetic or electromagnetic strength in attraction and/or repulsion) help to transfer the electromagnetic strength Fₘ in the correct direction.

Beyond that, between the electromagnets fixed to the teeth 129, 127 interact with permanent magnets and electromagnets or combinations fixed to the sarcophagus 188, 186 and they interact in a diagonal magnetic or electromagnetic strength to the magnets or electromagnets or combinations 188, 186 (Fig. 2) fixed to the sarcophagus 189, 187.

To illustrate the invention the following examples are given.

For example in a motorcycle, it is only necessary to use the second row of a torque increaser in "normal" direction I with the teeth 130, 131, 132. We don't need the first row of teeth 129, 128 and 127, because the motorcycle does'nt need a torque increaser with a opposite direction Iᵣ.

It is possible to, use an automatic gearbox with reverse, between the multiplier and the torque increaser or other gearbox (forward-reverse) between the multiplier and the generator. In that case, it is also only necessary to use one row for example the second row with the teeth 130, 131, 132 of torque increaser or the first row with the teeth 129, 128, 127. The torque increaser will turn always in the same direction I oder Iᵣ, if the turbine change the direction it is used the automatic gearbox with reverse, it's the same for example, if a car is in reverse.

There is a further possibility in this invention to arrange a so-called intermediate rotor between the first (west) component of torque increaser 137 and the central component of torque increaser 138 and another intermediate rotor between the second (east) component of torque increaser 139 and the central component of torque increaser 138, so the first (west) component of torque increaser 137 interact with that first intermediate rotor and this first intermediate rotor interact with central component of torque increaser 138, and second (east) component of torque increaser 139 interact with the other second intermediate rotor and this second intermediate rotor interact with central component of torque increaser 138.

Within this invention a possibility is suggested to use the torque increaser in small cars or motorcycles, where is not enough longitudinal space to place a linear disposition of the multiplier and the torque increaser as shown in Fig. 2.

In this alternative arrangement means are arranged, so that the rpm multiplier and the torque increaser, and a intermediate piece (gear, etc.) interacting with the central rotor of the torque increaser. In this particular case the rotor of generator and the central rotor 138 of the torque increaser are independent parts. The central rotor 138 of the torque increaser is no external part of the generator rotor.

In a lateral view the generator is placed over the rpm multiplier and the torque increaser. The generator, the rpm multiplier and the torque increaser form a "U". Thus torque increaser can be better used in small cars or motorcycles, where is not enough longitudinal space to place a linear disposition of the device.

Support bars are omitted in the drawing since their designs depend on the number and the disposition of the rotors of the torque increaser. The dimensions of the drawing does not represent a real scale, they are just shown as a reference.

### Reference numeral

RPM multiplier (Fig. 1):
- 110: second component of rpm multiplier (second gear)
- 110A: extension of the second component
- 111: magnetized rail (component of the support)
- 112: teeth of the major radius section of the second gear of the rpm multiplier, interlock with the torque increaser gear type rotors 122a, 123
- 113: teeth of the minor section of the second component of the rpm multiplier, interlock with
- 120: first component of the rpm multiplier (first gear)
- 120A: extension of the first component
- 121: magnetized rail (component of the support)
- 122: teeth of the mayor radius section of the first component 120 of the multiplier
- G: gears of the rpm multiplier

Torque increaser (Fig. 2 and Fig. 5 and Fig. 6):
- 122a: teeth, interlock with the last component of multiplier 112 (or with an automatic gear box if necessary)
- 123: teeth, interlock with the last component of multiplier 112 (or with an automatic gear box if necessary)
- 124, 125, 126: magnetized rail (component of the support)
- 127: teeth of first row of 139, of torque increaser Ir opposite sense. The gear teeth are completely solid in one of their sides and hollow in the other ones. Electromagnets or magnets or combinations, etc, are placed in this hole, interlock with 128. In the interaction with 128 is the electromagnetic strength.
- 128: teeth of first row of 138 , of torque increaser Iᵣ opposite sense. The gear teeth are completely solid in one of their sides and hollow in the other ones. Electromagnets or magnets or combinations, etc, are placed in this hole, interlock with 129 and 127. In the interaction with 129 and 127 is the electromagnetic strength.
- 129: teeth of first row of 137, of torque increaser Iᵣ. The gear teeth are completely solid in one of their sides and hollow in the other ones. Electromagnets or magnets or combinations, etc, are placed in this hole, interlock with 128. In the interaction with 128 is the electromagnetic strength.
- 130: teeth of second row of 137, torque increaser normal direction I. The gear teeth are completely solid in one of their sides and hollow in the other ones. Electromagnets or magnets or combinations, etc, are placed in this hole, interlock with 131. In the interaction with 131 is the electromagnetic strength.
- 131: teeth of second row of 138, torque increaser normal direction I. The gear teeth are completely solid in one of their sides and hollow in the other ones. Electromagnets or magnets or combinations, etc, are placed in this hole, interlock with 130 and 132. In the interaction with 130 and 132 is the electromagnetic strength.
- 132: teeth of second row of 139, torque increaser normal direction I. The gear teeth are completely solid in one of their sides and hollow in the other ones. Electromagnets or magnets or combinations, etc, are placed in this hole, interlock with 130. In the interaction with 130 is the electromagnetic strength.
- 137: first (west) component of torque increaser
- 138: cut of the external section (outer part) of the rotor of the generator or central component of torque increaser
- 139: second (east) component of torque increaser
- 136, 134, 135: magnetized rail (component of the support)
- 186,187,188,189: electromagnets fixed to the sarcophagus (electromagnetic strength in attraction or repulsion) its helps to transfer the electromagnetic strength in the correct direction.
- cw: places to put the conductive washer, in the necessary numbers according the electrical circuit
- A_{C}: curved arrow, sense of rotation of the rotors 137, 138, 139
- A_{L}: linear arrows, action of the electromagnetic strength.
- Eᵣ: electromagnetic strength (repulsion)
- Eₐ: electromagnetic strength (attraction)
- Gᵣ: rotor of the generator in the outer part
- Rₐ: rail of the rotor increaser (rotor device)
- Iᵣ: increaser in opposite direction of rotation
- I: increaser in normal direction of rotation
- Fₘ: electromagnetic strength
- D1: direction of the gears to the turbine
- D2: direction of the rotor of the generator to the generator

Conductive washer (Fig.3):

| | |
|---|---|
| 140, F | female part, cover the contact zone, the male part 142 rotate inside it making contact in the central zone of each rotor 137, 138, 139. |
| 141 | contact |
| 142, M | male part, fixed to the rotors 137, 138, 139 of the torque increaser, rotate inside the female part 140 |
| M | male part |
| F | female part |

Support rail (Fig. 4):

| | |
|---|---|
| 143 | friction part |
| 144, 145, 146 | keep centered the support by means of a magnetic or electromagnetic strength, to dissipate heat in the free spaces. |
| 147 | to support part of the weight by means of a magnetic or electromagnetic strength |
| 111, 121, 124, 125, 126, 136, 134, 135 | places to put the magnetic support, interact with 147, 144, 143, 146, 145. |

## Claims

1. Rpm multiplier composes a succession of gears (G) with at least two different toothed radii each, by coupling of a toothed radius of a first gear (120) with a toothed radius of a second gear (110), in this way that the toothed radius of the second gear (110) moves in relation to the toothed radius of the first gear (120) as many times as the second gear (110), **characterized by** the implementation of magnetized rails (121, 111) in extensions (120A, 110A) of the first and second gear (120, 110) comprising permanent magnets or electromagnets or combinations, they interact with means of support (143, 144, 145, 146, 147) in a support rail with the purpose of reducing friction.

2. Rpm multiplier of claim 1, **characterized in that** the first and the second gear (120, 110) are engaged in such a way, that the biggest radius of the first gear (120) engages with the smallest radius of the second gear (110), thus, the biggest radius of the second gear (110) rotates as many times in relation to the biggest radius of the first gear (120) as to the smallest radius of the last one (120), and successively on consecutive gears.

3. Rpm multiplier of claim 1, **characterized in that** the first and second gears (120, 110) are solid or hollow, to reduce the weight of the gears (120, 110).

4. Torque increaser composed of at least two rotors (137, 139) rotating in the same direction, a first and a second gear type rotor (137, 139) with gear teeth (129, 130 /127, 132) each, and a central rotor (138) rotating in a reverse direction, which presents the same disposition of gear teeth (128, 131), arranged to each other, so that the gear teeth (129, 130 / 127, 132) of the first and the second gear type rotor (137 139) face to the gear teeth (128, 131) of the central rotor (138), **characterized by** the implementation of magnetized rails (Rₐ, 124, 125, 126/ 136, 134, 135) on the first and the second gear type rotors (137, 139) and the central rotor (138) with permanent magnets or electromagnets or combinations, interact with the means of support (143, 144, 145, 146, 147) in a support rail with the purpose of reducing friction.

5. Torque increaser of claim 4, **characterized in that** the central rotor (138) of the torque increaser is an external or an independent part of the rotor of a generator (Gᵣ)

6. Torque increaser of claim 4, **characterized in that** the faced teeth (130, 131 / 131, 132 / 129, 128 / 128, 127) of the first and the second gear type rotors (137, 139) and the central rotor (138) comprise incorporate permanent magnets or electromagnets or combinations, so that the incorporate permanent magnets or electromagnets or combinations of the first and the second gear type rotors (137, 139) and the central rotor (138) interact with each other by magnetic or electromagnetic force.

7. Torque increaser of claim 4, **characterized in that** the incorporate permanent magnets or electromagnets or combinations of the first and the second gear type rotor (137, 139) and central rotor (138) interact with each other by repulsion.

8. Torque increaser of claim 4, **characterized in that** optionally permanent magnets or electromagnets or combinations (186, 187, 188, 189) of them, are arranged opposite to the incorporate permanent magnets or electromagnets or combinations in the teeth (127, 128, 129, 130, 131, 132) of the first and the second gear type rotors (137, 139) and the central rotor (138) placed in the skeleton or sarcophagus of the torque increaser, so that opposite incorporate permanent magnets or electromagnets or combinations in the teeth (186, 187, 188, 189)/(127, 128, 129, 130, 131, 132) interact with each other.

9. Torque increaser of claim 6, **characterized in that** the opposed permanent magnets or electromagnets or combinations (186, 187, 188, 189) in the skeleton or sarcophagus of the torque increaser of the first and the second gear type rotor (137, 139) and of the central rotor (138) interact with each other by attraction and/or repulsion.

10. Torque increaser of claim 4, **characterized by** comprising permanent magnets or electromagnets or combinations in the teeth (127, 128, 129) in a first row of the rotors (137, 138, 139) create a sense (A_{c}) of the rotation of the torque increaser (Iᵣ) in a opposite direction of the rotation of the central rotor (138).

11. Torque increaser of claim 4, **characterized by** comprising permanent magnets or electromagnets or combinations in the teeth (130, 131, 132) in a second row of the rotors (137, 138, 139) create a sense (A_{c}) of the rotation of the torque increaser (Iᵣ) in a normal direction of the rotation of the central rotor (138).

12. Torque increaser of claim 1, **characterized in that** the permanent magnets or electromagnets or combinations implemented of magnetized rails (Rₐ, 124, 125, 126/ 136, 134, 135) on the first and the second gear type rotor (137, 139) and the central rotor (138) interact with each other with the means of support (143, 144, 145, 146, 147) in the support rail by repulsion or attraction.

13. Torque increaser of claim 5, **characterized in that** gear teeth (127, 128, 129, 130, 131, 132) are completely solid in one of their sides and hollow in the other side, so that electromagnets or magnets or combinations are placed in a hole of the gear teeth (127, 128, 129, 130, 131, 132).

## Patentansprüche

1. Drehzahlvervielfacher bestehend aus einer Abfolge von Zahnrädern (G) mit jeweils mindestens zwei verschiedenen Zahnradien durch Koppeln eines Zahnradius eines ersten Zahnrads (120) mit einem Zahnradius eines zweiten Zahnrads (110) auf die Art, dass sich der Zahnradius des zweiten Zahnrads (110) in Bezug auf den Zahnradius des ersten Zahnrads (120) genauso oft bewegt wie das zweite Zahnrad (110), **gekennzeichnet durch** die Implementierung magnetisierter Schienen (121, 111) in Erweiterungen (120A, 110A) des ersten und des zweiten Zahnrads (120, 110), welche Permanentmagnete oder Elektromagnete oder Kombinationen umfassen, welche mit Trägermitteln (143, 144, 145, 146, 147) in einer Trägerschiene zu dem Zweck der Reduzierung von Reibung in Wechselwirkung treten.

2. Drehzahlvervielfacher nach Anspruch 1, **dadurch gekennzeichnet, dass** das erste und das zweite Zahnrad (120, 110) in einer derartigen Weise in Eingriff stehen, dass der größte Radius des ersten Zahnrads (120) mit dem kleinsten Radius des zweiten Zahnrads (110) in Eingriff steht, wobei sich folglich der größte Radius des zweiten Zahnrads (110) in Bezug auf den größten Radius des ersten Zahnrads (120) genauso oft dreht wie in Bezug auf den kleinsten Radius des Letzteren (120), und so weiter bei nachfolgenden Zahnrädern.

3. Drehzahlvervielfacher nach Anspruch 1, **dadurch gekennzeichnet, dass** das erste und das zweite Zahnrad (120, 110) massiv oder hohl sind, um die Masse der Zahnräder (120, 110) zu reduzieren.

4. Drehmomentverstärker bestehend aus mindestens zwei Rotoren (137, 139), welche sich in der gleichen Richtung drehen, einem ersten und einem zweiten Rotor vom Zahnradtyp (137, 139) jeweils mit Zahnradzähnen (129, 130/127, 132) und einem zentralen Rotor (138), welcher sich in eine umgekehrte Richtung dreht und welcher die gleiche Anordnung von Zahnradzähnen (128, 131) darstellt, welche so zueinander angeordnet sind, dass die Zahnradzähne (129, 130/127, 132) des ersten und des zweiten Rotors vom Zahnradtyp (137, 139) den Zahnradzähnen (128, 131) des zentralen Rotors (138) gegenüber stehen, **gekennzeichnet durch** die Implementierung magnetisierter Schienen (Rₐ, 124, 125, 126/136, 134, 135) auf dem ersten und dem zweiten Rotor vom Zahnradtyp (137, 139) und des zentralen Rotors (138) mit Permanentmagneten oder Elektromagneten oder Kombinationen, welche mit den Trägermitteln (143, 144, 145, 146, 147) in einer Trägerschiene zu dem Zweck der Reduzierung von Reibung in Wechselwirkung treten.

5. Drehmomentverstärker nach Anspruch 4, **dadurch gekennzeichnet, dass** der zentrale Rotor (138) des Drehmomentverstärkers ein externer oder ein unabhängiger Teil des Rotors eines Generators (Gᵣ) ist.

6. Drehmomentverstärker nach Anspruch 4, **dadurch gekennzeichnet, dass** die sich gegenüber stehenden Zähne (130, 131/131, 132/129, 128/128, 127) des ersten und des zweiten Rotors vom Zahnradtyp (137, 139) und des zentralen Rotors (138) einbezogene Permanentmagnete oder Elektromagnete oder Kombinationen umfassen, so dass die einbezogenen Permanentmagnete oder Elektromagnete oder Kombinationen des ersten und des zweiten Rotors vom Zahnradtyp (137, 139) und des zentralen Rotors (138) miteinander durch magnetische oder elektromagnetische Kraft in Wechselwirkung treten.

7. Drehmomentverstärker nach Anspruch 4, **dadurch gekennzeichnet, dass** die einbezogenen Permanentmagnete oder Elektromagnete oder Kombinationen des ersten und des zweiten Rotors vom Zahnradtyp (137, 139) und des zentralen Rotors (138) miteinander durch Abstoßung in Wechselwirkung treten.

8. Drehmomentverstärker nach Anspruch 4, **dadurch gekennzeichnet, dass** gegebenenfalls Permanentmagnete oder Elektromagnete oder Kombinationen (186, 187, 188, 189) von ihnen, den einbezogenen Permanentmagneten oder Elektromagneten oder Kombinationen in den Zähnen (127, 128, 129, 130, 131, 132) des ersten und des zweiten Rotors vom Zahnradtyp (137, 139) und des zentralen Rotors (138) entgegengesetzt angeordnet sind, welche in dem Gerüst oder Gehäuse des Drehmomentverstärkers angeordnet sind, so dass entgegengesetzt einbezogene Permanentmagnete oder Elektromagnete oder Kombinationen in den Zähnen (186, 187, 188, 189)/(127, 128, 129, 130, 131, 132) miteinander in Wechselwirkung treten.

9. Drehmomentverstärker nach Anspruch 6, **dadurch gekennzeichnet, dass** die gegenüber stehenden Permanentmagnete oder Elektromagnete oder Kombinationen (186, 187, 188, 189) in dem Gerüst oder Gehäuse des Drehmomentverstärkers des ersten und des zweiten Rotors vom Zahnradtyp (137, 139) und des zentralen Rotors (138) durch Anziehung und/oder durch Abstoßung miteinander in Wechselwirkung treten.

10. Drehmomentverstärker nach Anspruch 4, **gekennzeichnet durch** Umfassen von Permanentmagneten oder Elektromagneten oder Kombinationen in den Zähnen (127, 128, 129) in einer ersten Reihe der Rotoren (137, 138, 139), welche einen Drehsinn (A_{c}) des Drehmomentverstärkers (Iᵣ) in einer Gegenrichtung der Drehung des zentralen Rotors (138) erzeugen.

11. Drehmomentverstärker nach Anspruch 4, **gekennzeichnet durch** Umfassen von Permanentmagneten oder Elektromagneten oder Kombinationen in den Zähnen (130, 131, 132) in einer zweiten Reihe der Rotoren (137, 138, 139), welche einen Drehsinn (A_{c}) des Drehmomentverstärkers (Iᵣ) in einer normalen Drehrichtung des zentralen Rotors (138) erzeugen.

12. Drehmomentverstärker nach Anspruch 1, **dadurch gekennzeichnet, dass** die Permanentmagnete oder die Elektromagnete oder Kombinationen, welche als magnetisierte Schienen (Rₐ, 124, 125, 126/136, 134, 135) auf dem ersten und dem zweiten Rotor vom Zahnradtyp (137, 139) und dem zentralen Rotor (138) implementiert sind, miteinander mit den Trägermitteln (143, 144, 145, 146, 147) in der Trägerschiene durch Abstoßung oder durch Anziehung in Wechselwirkung treten.

13. Drehmomentverstärker nach Anspruch 5, **dadurch gekennzeichnet, dass** Zahnradzähne (127, 128, 129, 130, 131, 132) auf einer ihrer Seiten vollständig massiv sind und auf der anderen Seite hohl sind, so dass Elektromagnete oder Magnete oder Kombinationen in einer Öffnung der Zahnradzähne (127, 128, 129, 130, 131, 132) angeordnet sind.

## Revendications

1. Multiplicateur de vitesse composé d'une succession de roues (G) avec au moins deux différents rayons dentés, par couplage d'un rayon denté d'une première roue (120) à un rayon denté d'une seconde roue (110), de manière à ce que le rayon denté de la seconde roue (110) se déplace par rapport au rayon denté de la première roue (120) autant de fois que la seconde roue (110), **caractérisé par** l'utilisation de rails magnétiques (121, 111) dans les extensions (120A, 110A) des première et seconde roues (120, 110) comportant des aimants permanents, des électroaimants ou des combinaisons de ceux-ci. Elles interagissent avec des moyens de support (143, 144, 145, 146, 147), dans un rail de support, dans le but de réduire le frottement.

2. Multiplicateur de vitesse de la revendication 1, **caractérisé en ce que** les première et deuxième roues dentées (120, 110) sont agencées de telle sorte que le plus gros rayon de la première roue (120) se retrouve avec le plus petit rayon de la seconde roue (110). Ainsi, le plus gros rayon de la deuxième roue (110) tourne le même nombre de fois par rapport au plus gros rayon de la première roue (120) qu'à son plus petit rayon (120), et successivement sur des roues consécutives.

3. Multiplicateur de vitesse de la revendication 1, **caractérisé en ce que** les première et deuxième roues (120, 110) sont solides ou creuses, pour réduire le poids des roues (120, 110).

4. Multiplicateur de couple composé d'au moins deux rotors (137, 139) qui tournent dans le même sens, d'un premier et d'un deuxième rotor de type roue (137, 139) pourvu chacun de dents (129, 130/127, 132), et un rotor central (138) tournant dans un sens inverse, qui présente la même disposition de dents (128, 131), agencés l'un par rapport à l'autre, de sorte que les dents (129, 130/127, 132) du premier et du deuxième rotor de type roue (137, 139) font face aux dents (128, 131) du rotor central (138), **caractérisé par** l'utilisation de rails aimantés (Rₐ, 124, 125, 126/136, 134, 135) sur les premier et deuxième rotors de type roue (137, 139) et le rotor central (138) avec des aimants permanents, des électroaimants ou des combinaisons de ceux-ci, pour interagir avec des moyens de support (143, 144, 145, 146, 147), dans un rail de support, dans le but de réduire le frottement.

5. Multiplicateur de couple de la revendication 4, **caractérisé en ce que** le rotor central (138) du multiplicateur de couple est une partie externe ou autonome du rotor d'un générateur (Gᵣ).

6. Multiplicateur de couple de la revendication 4, **caractérisé en ce que** les dents parallèles (130, 131, 132 / 129, 128 / 128, 127) des premier et deuxième rotors de type roue (137, 139) et du rotor central (138) comprennent des aimants permanents, des électroaimants, ou des combinaisons de ceux-ci, incorporés, de telle sorte que les aimants permanents, les électroaimants, ou des combinaisons de ceux-ci, incorporés des premiers et deuxièmes rotors de type roue (137, 139) et du rotor central (138) interagissent entre eux sous l'effet d'une force magnétique ou électromagnétique.

7. Multiplicateur de couple de la revendication 4, **caractérisé en ce que** les aimants permanents, les électroaimants, ou des combinaisons de ceux-ci, incorporés des premiers et deuxièmes rotors de type roue (137, 139) et du rotor central (138) interagissent entre eux sous l'effet d'une répulsion.

8. Multiplicateur de couple de la revendication 4, **caractérisé en ce que** des aimants permanents, des électroaimants, ou des combinaisons de ceux-ci (186, 187, 188, 189), sont disposés à l'opposé des aimants permanents, des électroaimants, ou des combinaisons de ceux-ci, incorporés dans les dents (127, 128, 129, 130, 131, 132) des premiers et deuxièmes rotors de type roue (137, 139) et du rotor central (138) placés dans le squelette ou le boîtier du multiplicateur de couple, de sorte que les aimants permanents, les électroaimants, ou combinaisons de ceux-ci, opposés incorporés dans les dents (186, 187, 188, 189) / (127, 128, 129, 130, 131, 132) interagissent les uns avec les autres.

9. Multiplicateur de couple de la revendication 6, **caractérisé en ce que** les aimants permanents, électroaimants, ou des combinaisons de ceux-ci (186, 187, 188, 189), opposes se trouvant dans le squelette ou le boîtier du multiplicateur de couple du premier et deuxième rotor de type roue (137, 139) et du rotor central (138) interagissent l'un avec l'autre sous l'effet d'une attraction et / ou d'une répulsion.

10. Multiplicateur de couple de la revendication 4, caractérisé en ce la présence des aimants permanents, des électroaimants, ou des combinaisons de ceux-ci, dans les dents (127, 128, 129) dans une première rangée de rotors (137, 138, 139) crée un sens (A_{c}) de rotation du multiplicateur de couple (Iᵣ) opposé à la rotation du rotor central (138).

11. Multiplicateur de couple de la revendication 4, caractérisé en ce la présence des aimants permanents, des électroaimants, ou des combinaisons de ceux-ci, dans les dents (130, 131, 132) dans une seconde rangée de rotors (137, 138, 139) crée un sens (A_{c}) de rotation du multiplicateur de couple (Iᵣ) identique au sens de rotation du rotor central (138).

12. Multiplicateur de couple de la revendication 1, **caractérisé en ce que** les aimants permanents, électroaimants, ou des combinaisons de ceux-ci, pourvus de rails magnétiques (Rₐ, 124, 125, 126/136, 134, 135) sur les premier et deuxième rotors de type roue (137, 139) et le rotor central (138) interagissent l'un avec l'autre et avec le moyen de support (143, 144, 145, 146, 147) du rail de support sous l'effet d'une attraction ou d'une répulsion.

13. Multiplicateur de couple de la revendication 5, **caractérisé en ce que** les dents (127, 128, 129, 130, 131, 132) sont complètement solides d'un côté et creuses de l'autre, de telle manière que des aimants permanents, électroaimants, ou des combinaisons de ceux-ci, sont placés dans un creux des dents (127, 128, 129, 130, 131, 132).
